(19) Europäisches Patentamt
European Patent Office
Office européen des brevets

(11) **EP 4 079 687 B1**

(12) **EUROPEAN PATENT SPECIFICATION**

(45) Date of publication and mention
of the grant of the patent:
**03.12.2025 Bulletin 2025/49**

(21) Application number: **21169693.5**

(22) Date of filing: **21.04.2021**

(51) International Patent Classification (IPC):
**C01B 33/02** $^{(2006.01)}$     **C01B 33/00** $^{(2006.01)}$
**H01M 4/38** $^{(2006.01)}$     **H01M 10/052** $^{(2010.01)}$

(52) Cooperative Patent Classification (CPC):
**C01B 33/02; C01B 33/00; H01M 4/386;**
**H01M 10/052;** Y02E 60/10

(54) **MONOLAYER COATING OF SILICON NANO PARTICLES**

EINSCHICHTIGE BESCHICHTUNG VON SILIZIUM-NANOTEILCHEN

REVÊTEMENT MONOCOUCHE DE NANOPARTICULES DE SILICIUM

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**26.10.2022 Bulletin 2022/43**

(73) Proprietor: **Cenate AS**
**1814 Askim (NO)**

(72) Inventors:
• SAUAR, Erik
N-0860 Oslo (NO)
• KIRKENGEN, Martin
N-1814 Askim (NO)

(74) Representative: **Acapo Onsagers AS**
**Edvard Griegs vei 1**
**5059 Bergen (NO)**

(56) References cited:
**EP-B1- 2 588 409**     **WO-A1-2021/048556**
**US-A1- 2009 233 426**     **US-A1- 2019 296 341**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention concerns a passivated silicon particle having an ultrathin coating and a method of manufacturing the passivated silicon particle.

## Background

It will be necessary with a strong increase in the usage of renewable power and the electrification of many sectors in the society presently running on fossil fuel energy to meet the goals of The Paris Agreement under the UN Climate Convention. A vital part to obtain these goals is access to rechargeable batteries having excellent specific energies.

Lithium has a comparably very low density of $0.534$ g/cm$^3$ and also a high standard reduction potential of $-3.045$ V for the half-reaction $Li^0 \rightarrow Li^+ + e^-$. This makes lithium an attractive candidate for making electrochemical cells with high energy density. However, secondary (rechargeable) electrochemical cells having a negative electrode of metallic lithium have shown to be encumbered with a persistent problem of dendrite formation upon charging which tends to short-circuit the electrochemical cell after a few charge-discharge cycles.

The dendrite problem was solved by applying a negative electrode capable of releasably storing lithium atoms by intercalation. Such batteries are known as secondary lithium-ion batteries (LIBs). The electrochemical properties of LIBs are directly influenced by the physical and chemical properties of the active material(s) of the negative electrode. Both material choice and preparation as well as appropriate architectural modification and design of the active material affects the battery performance. A key problem in this regard was, and still is, to find active materials which may reliably and reversibly store lithium atoms at a high volumetric density when the battery is charged and then release the lithium as ions ($Li^+$) when being discharged in a high number of successive charge-discharging cycles.

At present, most of the commercially available LIBs apply graphite as the active material of the negative electrode. Graphite may host/pack one lithium-ion per six carbon atoms by intercalation with little shape deformation and has a theoretical specific energy of 372 mAh/g. Commercially available secondary LIBs with graphite anodes typically obtain a specific energy of 100 - 200 Wh/kg, making e.g. a mid-size electric car battery weigh several hundred kilos. This level of specific energy density is probably insufficient to realise the goal of the Paris Agreement.

One strategy for improving the specific energy of LIBs is to find materials having higher storage capacity of lithium-ions than graphite for use as the active material of the negative electrode. One interesting and much investigated candidate in this regard is silicon, due to its high capacity for storing lithium atoms by diffusion and alloying. At typical ambient temperatures, the most lithiated phase of silicon is $Li_{3.75}Si$ having a theoretic specific capacity of 3579 mAh/g. Negative electrodes of silicon also have the benefit of enabling providing an attractive working potential reducing the safety concerns related to lithium deposition upon cell over-charge.

The lithiation and delithiation of the anode causes huge volume expansions and contractions, respectively in the silicon material. At is most lithiated state of $Li_{3.75}Si$, the silicon material has a volume of around 320 % higher than the non-lithiated state. The relatively large volume variation associated with lithiation and delithiation cycles is reported to cause cracking and/or pulverisation of the silicon electrode, which may lead to a range of problems for the performance of the LIB such as loss of electric contact, loss of active material in the electrode, ineffective electron transfer, repeated dynamic formations of solid electrolyte interfaces, etc.

The use of nanoscale silicon material has been investigated as a solution to overcome the volume expansion issue since nanoscale Si-particles may better accommodate the volume variations and put less stress on their surroundings. It has been demonstrated that use of nanoscale particles in electrodes may provide electrodes with outstanding properties due to the small particle size causing effects such as improved electrical conductivity, improved mechanical and optical properties, etc. Furthermore, since nanosized particles have a very high surface area to volume ratio, negative electrodes having nanosized active materials may provide excellent charge/discharge capacity due to high available surface for absorption/desorption of lithium-ions.

The interatomic distance between silicon atoms multiplies as it accommodates lithium ions (by lithiation), so that the particles may reach up to 420 % of the original volume. For crystalline silicon, the expansion causes large anisotropic stresses to occur within the electrode material, leading to increased fracturing and crumbling of the silicon material. This anisotropic stress has been found to be reduced in some anode configurations if the silicon material itself is amorphous.

There are several challenges in the silicon/graphite anode that are declining when the silicon particles are made smaller. The absolute expansion of each particle will be less, the mechanical pressure from each particle on their surroundings will be less and the diffusion distance for lithium inside silicon will be less. By increasing the surface-to-volume ratio, the current density over particle surfaces decreases, reducing harmful overpotentials.

On the other hand, the increasing surface area leads to new challenges. These On the other hand, the increasing surface-to-volume ratio leads to new challenges. These include some Li being locked in at the surfaces themselves (irreversible losses during the first cycles) in the anode as well as an increasing risk of auto-ignition in air and potentially larger irreversible first cycle losses related to silicon oxides formed during air exposure.

Silicon surfaces react spontaneously and exothermically with oxygen forming an oxidised surface layer of silicon oxide often denoted as the native oxide layer. At around room temperature the native oxide layer becomes approximately 3 nm thick before the oxidation stops and the interior of the silicon is protected from further oxidation. However, with increasing temperatures the oxidation of the silicon increases, and at sufficiently high temperatures, the silicon can become completely oxidized.

Due to the nanoscale sizes of silicon particles used as active electrode material, a surface coating rapidly becomes a significant mass and volume fraction of the nanoscale particles with increasing coating thickness. For example, if a 40 nm diameter silicon particle is allowed to form a native oxide layer of 3 nm, approx. 60 % of the silicon phase of the pristine particle would be converted to silicon oxide. Even a coating as thin as 1 nm represents as much as 14 % of the volume of these small particle. The coating will by necessity not have the same storage capacity for Lithium as the silicon core - silicon having the highest theoretical capacity known. Even worse, the formed silicon oxide in the particles will irreversibly trap lithium during the initial electrochemical reactions. Both the coating and the oxide fraction should therefore be kept as low as possible.

The specific surface area ($m^2/g$) of a particulate material clearly increases with decreasing particle sizes, increasing the chemical energy that can be released per gram due to this initial reaction. At the same time, the thermal conductivity of the particulate material decreases with decreasing particle sizes. This increased heat generation combined with a lack of effective cooling, further combined with the temperature dependence of the speed and depth of the exothermic oxidation reaction of the silicon particles, may cause an accelerating accumulation of heat, called a thermal runaway. The reaction can heat the silicon material to several hundred degrees Celsius, and effectively oxidizing the material completely. While the $SiO_2$ will remain as a (glowing) solid, any other impurities or coatings on the material can cause a flame. In addition to the destruction of the product, the heat can ignite other nearby materials. Nano silicon with an average diameter of 50 nm for example may easily auto ignite when exposed to air for the first time. Mass production and transport of thousands of tons of silicon powder that may auto ignite if exposed to air is an unacceptable safety hazard and a rather unattractive industrial solution.

It is therefore necessary to protect fine particulate silicon particles from being excessively oxidised by ambient oxygen.

A feasible, but rather cumbersome and expensive solution of this problem is to keep fine particulate silicon in an oxygen free environment during transportation, handling, storing, and/or all subsequent processing after being produced. From a competitive production perspective, it is a significantly better solution to give pristine particles an oxygen protecting surface coating which prevents or at least sufficiently delays intrusion of ambient oxygen molecules into the silicon phase of the particles such that they can be exposed to ambient air without excessive oxidation of the silicon causing risk for thermal run-away/self-ignition.

Another theoretically feasible method is to dissolve the nanoparticles in a liquid, reducing access to oxygen. This would both add a lot of weight, as the packing density of silicon nanoparticles can be low, and it can be a cumbersome process to dry the powder before use. Evaporation from the particle surfaces will lead to cooling of the powder, and the extreme insulating properties will in this case again make the heat transfer slow, leading to extremely slow evaporation. This severely limits the practical application of this solution, emphasizing the importance of find a way to handle dry powder.

Another consideration which becomes important when the silicon particles are to be applied as active electrode material in secondary lithium ion batteries (LIBs) is that the oxygen protecting coating should limit electrochemical reactions that irreversibly react with Lithium. It is known that oxygen, nitrogen or hydrogen can all form stable phases with lithium at the potentials where the negative electrode is lithiated - typically <0,5V vs Li. It is therefore generally seen as detrimental to use these materials in the coating for the negative electrode.

Furthermore, it can be beneficial to use predominantly amorphous silicon in the core of the particles. It is therefore important to use a coating method that allows keeping the temperature below the crystallization temperature of the silicon or silicon-based core. Many coating methods specify temperatures higher than 1000C for purposes like silicon carbide formation, oxide removal, silicon nitride formation or similar processes. The methods described in this invention are equally applicable to amorphous silicon and crystalline silicon powders, and do not significantly change the crystallinity of the core of the particle.

What is shown in the present invention, and which was pleasantly surprising to the inventors, is that there exists a narrow parameter space in which a layer can be formed that is sufficiently thin to add only negligible irreversible lithium losses, while simultaneously reducing oxidation to a level where the product quality is not affected when handling the product in air for industrially relevant times, and where safety during transportation can still be ensured. Furthermore, this layer can be formed sufficiently uniformly on the powder even in large powder volumes, due to the small gas molecules (approximately the same as typical oxidants such as oxygen or water), and the self-limiting nature of the reaction.

**Prior art**

Kratos (US 10,211,454 B2) discloses functionalized Group IVA particles, methods of preparing the Group IVA particles, and methods of using the Group IVA particles. The Group IVA particles may be passivated with at least one layer of material covering at least a portion of the particle. The layer of material may be a covalently bonded non-dielectric layer of material. The non-dielectric layer may be derived from a compound selected from the group consisting of alkenes, alkynes, aromatics, heteroaromatics, cycloalkenes, alcohols, glycols, thiols, disulfides, amines, amides, pyridines, pyrrols, furans, thiophenes, cyanates, isocyanates, isothiocyanates, ketones, carboxylic acids, amino acids, and aldehydes. The non-dielectric layer may be derived from a compound selected from the group consisting toluene, benzene, a polycyclic aromatic, a fullerene, a metallofullerene, a styrene, a cyclooctatetraene, a norbornadiene, a primary alkene, a primary alkyne, a saturated or unsaturated fatty acid, a peptide, a protein, an enzyme, 2,3,6,7-tetrahydroxyanthracene, and terephthalaldehyde. While the document is ambiguous in how these molecules should be applied, the descriptions only specify the use of liquids. The non-dielectric layer may possess functional groups capable of forming covalent bonds to other reagents. The Group IVA particles may be used in various technologies, including lithium ion batteries and photovoltaic cells. The document does not look into inorganic options in the gas phase and demonstrate no understanding of the importance of using small molecules that can be deposited as a monolayer in a controlled way.

From Sourice et al. (2015) [1] it is known a method for producing nanoscale amorphous silicon particles having a carbon shell/coating by a two-stage laser pyrolysis process where a gaseous flow of silane diluted in an inert gas enters a first reaction zone irradiated by a $CO_2$-laser to decompose the silane gas into amorphous silicon core particles. The gas with the formed silicon core particles are then added ethylene and passed to a second reaction zone and irradiated by a $CO_2$-laser to decompose the ethylene into a carbon shell deposited onto the silicon core particles. The amorphous silicon particles with a carbon coating are found to have excellent specific capacity and high charge/discharge-cycling capability. The particles used by Sourice, however, were rather large, and experiments performed by the present inventors with coatings using this chemistry leads not to monolayer coatings, but to poorly controlled, highly inhomogeneous coatings. In particular, it is observed accumulation of carbon in concave structures. Silicon nanoparticles formed from the gas phase can be agglomerated into secondary structures, with so-called 'necking' in the joints between primary particles. Ethylene can accumulate at such necking sites, leading to excess deposition, while other parts of the particle is not necessarily covered at all. Furthermore, upon heat treatment of the powders with ethylene coating, it is observed significant outgassing of both hydrogen and - depending on deposition temperature - ethylene.

A carbon coating made entirely of alkanes or alkenes contains a lot of hydrogen that will degas upon heating typically around 600 °C. This degassing may disturb the anode production process typically done at higher temperatures and/or require gas handling processes in the anode manufacturing. Furthermore, if such coatings are degassed by an interim heating step, the resulting coating may contain carbon - carbon double bonds that make the surface highly reactive and/or explosive in air, defeating the purpose of the coating. A partial ethylene coating may be beneficial by reducing the need for other coating, but according to experiments by the present inventors it is not sufficient in itself, and it likely cannot be simultaneously safe and degassed.

US 2019/249301 A1 teaches a method including: 1) performing an atomic layer deposition cycle including (a) introducing precursors into a deposition chamber housing a substrate to deposit a material on the substrate; and (b) introducing a passivation gas into the deposition chamber to passivate a surface of the material; and 2) repeating 1) a plurality of times to form a film of the material. Such Atomic Layer Deposition is well known but is very costly both due to the gases used and the multiple process steps involved. For 50 nm material the amount of surface per gram is also so high that the gas consumption will be unusually high and costly. Most metal surfaces on nano particles below 50 nm size will also be so reactive in air that they are not acceptable to handle in the necessary multi ton scale of industrial manufacturing. ALD techniques are regularly used to coat oxides in the positive electrode of a Li-ion battery, for example forming an Aluminium Oxide layer on a Cobalt Oxide particle. Unfortunately, the step in which the oxygen atom is added is not necessarily self-limiting. To our knowledge, most ALD setups use water as the source for oxygen. When using ALD on silicon, the first oxygen deposition can therefore lead to a coating which is already too thick, rather than a controlled monolayer.

Functionalization of silicon surfaces is reported in many papers, in particular in the semiconductor industry, or for the production of silicon quantum dots for optical applications. The studies describe methods which are typically limited to single surfaces with a known crystal orientation, they describe systems that need to be stable on other time scales (years rather than <1 hour), and they do not have limitations regarding irreversible capacity during lithiation. It is therefore not obvious that the same coatings give a powder with beneficial behaviour in a battery.

Document EP 2 588 049 A1 teaches a submicron sized Si based powder having an average primary particle size between 20 nm and 200 nm, wherein the powder has a surface layer comprising SiOx , with 0⟨x⟨2, the surface layer having an average thickness between 0.5 nm and 10 nm, and wherein the powder has a total oxygen content equal or less than 3% by weight at room temperature.

Document US 2019/296341 A1 discloses methods for producing silicon particles by grinding silicon-containing solids, wherein one or more gases are used, which contain reactive gas at a partial pressure of ≥0.3 bar, wherein reactive gases are selected from the group comprising oxygen, ozone, inorganic peroxides, carbon monoxide, carbon dioxide, ammonia, nitrogen oxides, hydrogen cyanide, hydrogen sulphide, sulphur dioxide, and volatile organic compounds.

**Objective of the invention**

The main objective of the invention is to provide nanoscale silicon particles being surface passivated by an ultrathin coating enabling handling them in open air without risk of run-away oxidation/auto-ignition.

Another objective of the invention is to provide a manufacturing method of the surface passivated nanoscale silicon particles.

**Description of the invention**

The present invention is based on the discovery that a coating derived by simply reacting pristine silicon particles with gaseous CO or NO, produces a surface coating on the silicon particles providing an effective protection against ambient oxygen, with minimal outgassing during subsequent heat treatments. The protection effect is so strong that even nanoscale silicon particles having coatings as thin as down to about 0.2 - 0.3 nm, corresponding to only one to two-three atom layers thick, are sufficiently protected to enable short term storing, handling and/or processing the particles for a practical amount of time (i.e. 20 - 60 minutes) in "open" air without excessive/unacceptable oxidation of the particles that would otherwise occur - and in particular during auto-ignition.

Furthermore, if the coating is performed at excessive temperature or for too long time, some oxygen may start forming $SiO_2$ phases. These are not desirable, and it is therefore advantageous to tune the process carefully. The heat released in the interaction between CO and Si is less than during oxidation in air. Without being bound by theory, it is assumed that the carbon acts as a diffusion barrier, limiting the penetration of oxygen into the silicon. The oxygen passivates dangling bonds at the particle surface in a more stable way than for example a hydrogen passivation and is less likely to form gaseous species in subsequent heat treatments. For particles with very high surface to volume ratios, even a single surface passivation of hydrogen can give a significant outgassing.

Nitrogen is believed to act in a similar role as the carbon, limiting the oxygen penetration into the silicon. Nitrogen will also allow some surface termination, as it has three bonding sites, vs the four for silicon. Nitrogen oxide (NO) will provide both nitrogen and oxygen from the same molecule. If the gas is heated to a too high level, the NO can self-react to form $N_2$ and $O_2$. In this case, the coating will be very rich in oxygen. Still, the reaction speed and the heating from the reaction will be less than with a pure oxygen coating, and the process is therefore more easily controlled.

These coatings can also be combined with an ethene ($C_2H_4$) coating. While ethene on its own is not likely to give a very homogeneous coating, and heat treatment of the ethene coating for H removal is likely to leave many dangling bonds and a very reactive surface, a $C_2H_4$ coating followed by a CO or NO coating can combine the strengths of both strategies, giving a coating with more carbon and thereby less irreversible capacity from the oxygen or nitrogen added, while having enough oxygen and nitrogen to terminate dangling bonds efficiently and reduce the risk of thermal runaway.

Thus, in a first aspect, the invention relates to a passivated silicon particle,

> comprising a silicon particle and a coating covering at least a portion of a surface of the silicon particle, characterised in that
> the coating is a reaction product of:
> either
>
> > reacting the silicon surface with gaseous carbon monoxide, and an elemental composition of the surface of the particle including the coating is given by the formula: $Si_xC_yO_z$, where $x \in [0.60, 0.90]$, $y \in [0.05, 0.2]$, and $z \in [0.05, 0.2]$,
> > or
> > reacting the silicon surface with gaseous nitrogen monoxide, and an elemental composition of the surface of the particle including the coating is given by the formula: $Si_xN_yO_z$, where $x \in [0.60, 0.90]$, $y \in [0.05, 0.2]$, and $z \in [0.05, 0.2]$,
> > wherein
> > the elemental composition is determined by XPS analysis applying monochromated Al Kα radiation at 1486.6 eV, where the data analysis applies CasaXPS software with Shirley background subtraction and where the energy axis is calibrated by using pure Si 2p 3/2 = 99.4 eV.

As used herein, the term "surface layer is derived from one or more gaseous" means that the surface coating is a result of simply contacting pristine silicon particles (particles with a clean non-oxidised surface) with a gas of that compound at a suitable temperature. Gaseous CO and NO are both reactive with a pristine silicon surface and will form a surface layer at the surface of the silicon particle comprising silicon atoms, carbon and/or nitrogen atoms, and oxygen atoms. A hydrogen passivated silicon surface may not be very reactive with the CO or NO. When using silicon nanoparticles formed from silane gas, or particles produced by milling, with subsequent oxide removal using HF or another etch that leaves the surface hydrogen passivated, it can therefore be necessary to remove most of the hydrogen in a low pressure, high temperature treatment, hereafter called 'dehydrogenization', before proceeding to coating of the particles. It is obviously imperative to not expose the particles to oxidizing agents like oxygen or water between the dehydrogenization and the coating. The dehydrogenization is likely to remove most of the hydrogen bonded to the surface and should also remove as much as possible of the hydrogen bound to atoms in the interior of the particles.

As mentioned above, some oxidation of the particle surface is usually, in practice, unavoidable such the coated particles according to the invention will usually have an element composition at its surface region comprising the elements: Si, C or N, and O. In particular, characterization of the particle may require a short exposure to air, or it can lead to contamination with volatile organic species in the air or in the instrument. Such limited oxidation or contamination should not be interpreted as limiting the scope of the invention.

The term "surface layer covering at least a portion of a surface of the silicon particle" as used herein, relates to the practicality that when a very fine particulate powder is reacted with a gas phase, it cannot be applied fluidisation to obtain a homogenous contact between the gas phase and the surface of the particles because fluidisation will inevitably suspend the minute particles in the fluidisation gas and carry them out of the fluidisation reactor with the fluidisation gas. It is necessary to apply a stationary or near stationary gas phase in contact with non-suspended particles such that particles in the bulk powder may be physically in contact with each other and mutually shielding portions of their surface towards the reactive gas causing "islands" of more or less pristine silicon surface open to oxidation when coming in contact with air. Thus, in practice, the surface of the silicon particles will comprise Si, C or N, and O atoms.

Furthermore, in one example embodiment, the core of the coated particle may not be pure silicon, but can comprise additional carbon, nitrogen, oxygen or other atoms. These atoms can then also be found in the surface layer. Still, even powders with down to 50 % Si atoms in the outermost atomic layer can have so many silicon dangling bonds at the surface that can contribute to oxidation, leading to the abovementioned thermal runaway or self-ignition.

XPS investigations of the silicon particles indicate that the coating formed upon contact with CO or NO is a mixture of reaction products where the gases have reacted both as functional groups and as dissociated atoms entering the molecular lattice of the silicon phase. For example, in the case of reacting the silicon surface with carbon monoxide, the XPS analysis finds carbon atoms bounded to an oxygen atom indicating formation of a silicon carbonyl, $Si_nCO$, compound, and carbon atoms bounded to a silicon atom and oxygen atoms bonded to silicon atoms indicating that the CO molecule is dissociated and the carbon and oxygen atom are bound to separate Si atoms in the molecular lattice of the silicon phase. The XPS data also indicates that there may be formed four-membered ring structures of Si-O-Si-C on the particle surface.

The XPS results indicate that the molecular structure and composition of the coating derived from CO or NO may be a complex mixture of reaction products from both dissociated and non-dissociated gas molecules making it difficult to define the coating as a chemical compound. However, the XPS analysis provides the atomic percent of the different elements present in the molecular lattice at the surface region where reflected radiation can escape to the detector. The X-rays will penetrate and retrieve information from a substantially equal depth into the molecular lattice of the silicon particles in each measurement such that the XRD analysis determines the atomic composition of a substantially equal thickness of the outermost bulk phase and the surface layer of the particles. The absorption cross section of radiation from different atoms may differ, leading to different signal based on the depth at which the different atoms is found. Some interpretation is therefore necessary and must be performed by a skilled operator with experience from similar materials. This makes the atomic composition determined by XPS an indirect measurement of the thickness of the coating derived from one or more of CO, and NO regardless of the particle size as long as the X rays and the reemitted signals do not penetrate through the entire particles and make the XPS analysis include the coating on the shaded side (backside) of the particles. In practice, this means that the XPS analysis is reliable as long as the silicon particles are 10 nm or more in diameter.

Transmission Electron Microscopy (TEM), and in particular Electron Energy Loss Spectroscopy (EELS) measurements can also be used to estimate the thickness, and in particular the homogeneity, of a coating layer. Because the TEM-image is a cross section of an entire particle, the coating can appear somewhat thicker than it really is, due to surface roughness or the curvature of the surface. Also, EELS may be less suitable than XPS for precise analysis of composition. TEM is therefore primarily used for verification of homogeneity, while XPS is used for qualitative and quantitative analysis of the surface coatings.

As used herein, when the term "XPS analysis" is applied for elemental analysis of the silicon particles, the term refers to X-ray Photon Spectroscopy (XPS) measurements made in a spectrometer applying monochromated Al K$\alpha$ radiation at 1486.6 eV, and the data analysis is made by using CasaXPS software with Shirley background subtraction and calibration of the energy axis using pure Si 2p 3/2 = 99.4 eV. It is possible to use spectrometers applying other radiation sources with other wave lengths and convert these measurements to be comparable to measurements applying monochromated Al K$\alpha$ radiation at 1486.6 eV. Such conversations are well known to the skilled person.

Furthermore, when the term "XRD analysis" is applied for determination of the molecular structure of the silicon particles, the term refers to XRD measurements made with a diffractometer applying unmonochromated Cu Kα radiation and Gaussian peak fitting to determine the Full Width at Half Maximum. Cu Kα radiation has a high intensity and a wavelength of 1.5406 Å which corresponds well with the interatomic distances in solid crystalline silicon making the analysis sensitive to presence of crystalline phases in the silicon particles. Also, when XRD is applied on particulate material it may also be denoted as powder X-ray diffraction (PXD) in the literature.

An example embodiment of the silicon particles according to the invention intended for being used as active electrode material in secondary LIBs, the coating derived from one or more of CO and NO may advantageously have a thickness in the range of from 0.1 to 3 nm, preferably of from 0.1 to 2 nm, more preferably of from 0.2 to 1.5 nm, more preferably of from 0.2 to 1.0 nm, more preferably of from 0.4 to 0.7 nm and most preferably of from 0.5 to 0.6 nm. The thickness can be determined by High Resolution Bright Field Transmission Electron Microscopy (TEM) to visualize the layer thickness, while using Scanning Transmission Electron Microscopy with Electron Energy Loss Spectroscopy and Energy Dispersive X-Ray Spectroscopy to confirm that both the particle and the observed outer layer has the expected chemical composition.

While the XPS signal penetrates to represent atoms down to a depth of around 5 nm, the XPS signal will be exponentially weaker for atoms in the depth of the particle such that deep-lying elements give a weaker signal than the ones near the surface. For very thin coating layers (<1nm) the signal can still be expected to have a near linear relation to layer thickness. In our experience, in the case of applying CO to derive the coating on pristine silicon particles, the elemental composition of the surface region of the silicon particles as measured by XPS analysis will consist of C, O, Si and unavoidable impurities, and a 0.1 to 3 nm thick coating derived from CO, the element composition of the surface region of the particles as determined by XPS analysis may typically be given by the formula: $Si_xC_yO_z$, where $x \in$ [0.60, 0.90], $y \in$ [0.05, 0.2], and $z \in$ [0.05, 0.2]. Similarly, the case of applying NO to derive the coating on pristine silicon particles, the elemental composition of the surface region of the silicon particles as measured by XPS analysis will consist of N, O, Si, and unavoidable impurities, and a 0.1 to 3 nm thick coating derived from NO, the element composition of the surface region of the particles as determined by XPS analysis may typically be given by the formula: $Si_xN_yO_z$, where $x \in$ [0.60, 0.90], $y \in$ [0.05, 0.2], and $z \in$ [0.05, 0.2].

The XPS analysis is typically performed once in survey mode, a quick scan over a wide energy range, and once in high resolution mode for the key elements for which extra information is needed. The survey scan will give information about the elemental composition of the sample. The high resolution mode will give more detailed information about how the elements are bonded to their neighbours. The above described atom percentages are based on the survey scan results, and peak positions based on the high resolution results. For example, an XPS survey giving a high resolution C1s peak having a contribution of >25 % from a peak in the range 283 - 284 eV indicates that the carbon is chemically bonded to Si, i.e. as SiC. An XPS survey giving a high resolution O1s peak having a contribution of >25 % from a peak in the range 531.5 - 532.5 eV indicates that the oxygen is chemically bonded as Si - O - C. And an XPS survey giving a high resolution N1s peak having a contribution of >50 % from a peak in the range 397.5 - 398.5 eV, indicates that the nitrogen is chemically bonded as SiN.

In an example embodiment of the silicon particles according to the invention, suitable for being used an active electrode material in secondary LIBs, may advantageously have a particle size in the range of from 10 to 200 nm, preferably in the range of from 15 to 150 nm, preferably in the range of from 20 to 100 nm, and most preferably in the range of from 20 to 50 nm. The determination of the particle sizes may be obtained by use of the Brunauer-Emmet-Teller (BET) analysis according to ISO 9277:2010. The above specifications of particle sizes corresponds to a BET surface area of from 15 to 300 $m^2/g$, preferably in the range of from 20 to 200 $m^2/g$, more preferably in the range of from 30 to 150 $m^2/g$, and most preferably in the range of from 60 to 150 $m^2/g$, respectively, when assuming a density of the silicon particles of 2000 $kg/m^3$.

The silicon phase of the particles of the invention may be crystalline or amorphous. Particles intended to be applied as active electrode material in LIBs may advantageously be amorphous and/or nanocrystalline because amorphous and nanocrystalline silicon has less strain in the first lithiation cycle. Silicon particles being amorphous and/or nanocrystalline from the first lithiation/delithiation cycle will be more resilient towards the volume changes associated with charging/discharging cycles giving a LIB with improved cyclability. However, amorphous and/or nanocrystalline silicon will typically crystallize when heated to 600 to 700 °C. This may be a disadvantage for particles intended to be applied as active electrode material in LIBs since the production process for making the electrode and/or battery cell may involve heat treatments/process steps at such and somewhat higher temperatures. An experimental discovery made by the inventors shows that amorphous and/or nanocrystalline silicon can be temperature stabilised, i.e. obtaining an increased crystallisation temperature, by incorporating an amount of guest atoms in the silicon molecular structure.

Thus, in one example embodiment, the silicon phase of the passivated particles according to the invention is amorphous, wherein

- the silicon phase comprises a chemical compound of formula: $Si_{(1-x)}M_x$, where $0.005 \leq x < 0.20$ and M is at least one substitution element chosen from; C, N, O, or a combination thereof, and
- the particles, when subjected to XRD analysis applying unmonochromated CuKα radiation, exhibit one peak at around 28° and one peak at around 52°, and where both peaks have a Full Width at Half Maximum of at least 5° when using Gaussian peak fitting.

As mentioned, XRD analysis may be applied to measure whether a silicon phase is crystalline or amorphous because crystalline materials, due to their high degree of ordering and symmetry in their atomic structure, tend to give sharp Bragg peaks. For crystalline silicon materials, the XRD-analysis applying unmonochromated CuKα radiation typically gives sharp peaks at 28.4°, 47.4°, and at 56.1° in the diffraction patterns while amorphous and/or nanocrystalline silicon which lack the long-range order characteristic of crystalline molecular structures, typically gives broader peaks being significantly more "smeared-out". Amorphous and/or nanocrystalline silicon typically gives rounded peaks at 28° and 52° which when applying a Gaussian fit to reduce noise get a well-defined value for the maximum and the full width at half maximum (FWHM) of both peaks of at least 5°.

In a second aspect, the invention relates to a method for manufacturing passivated silicon particles according to the first aspect of the invention, wherein the method comprises the following steps to be executed in successive order:

a) providing non-oxidised silicon particles,
b) placing the non-oxidised silicon particles in an oxygen free reactor chamber,
c) forming a coating at least partly covering a surface of the non-oxidised silicon particles, and
d) collecting the passivated silicon particles from the reaction chamber, characterised in that

the formation of the coating in step c) is obtained by the following steps:

c-1) introducing a precursor gas being gaseous carbon monoxide, CO, or gaseous nitrogen monoxide, NO, into the reactor chamber, and
c-2) maintaining the silicon particles in the reaction chamber for a period of time until the coating is formed on the silicon particles.

The term "non-oxidised" as used herein means that the silicon particles are protected from coming in contact with ambient oxygen from production to the process of depositing the oxygen-protective coating of the invention. I.e., non-oxidised silicon particles are particles practically without the native oxide surface layer.

The term "oxygen free reactor chamber" as used herein means that the reactor chamber contains practically no free oxygen which may react with the silicon particles and form a native oxide layer. The reactor may be made oxygen free by e.g. having an atmosphere of inert gas and/or by evacuating the atmosphere to a vacuum inside the reactor, etc.

The period of time required to form the coating varies widely with type of reactive gas being applied, the reaction temperature, partial gas pressure of the reactive applied in the reactor chamber, and the intended thickness of the coating to be formed. The experience made by the inventors indicate that the reactive gases, CO and NO do form the coating at a wide range og temperatures and partial pressures, such that the required period of time may vary from less than a minute to several hours. However, the person skilled in the art is able by simple trial and error tests to establish which residence times should be applied to form the intended coating at given reaction conditions.

In one example embodiment, the invention according to the second aspect may further comprise a dehydrogenation step to remove eventual hydrogen on the silicon surface before forming the coating. Hydrogen bonds to dangling bonds on a silicon surface and it may form stable phases with lithium. Removal of hydrogen may thus sensitize the silicon surface and enhance the intended reaction between the precursor gas(es) and the silicon, and it may reduce irreversible loss of lithium in a lithium-ion battery if the particles are used as active electrode material. The dehydrogenation may advantageously be performed in the reaction chamber prior to introduction of the coating forming precursor gas(es), and is obtained by bringing the temperature of the non-oxidised silicon particles to a temperature in the range of from 400 to 600 °C, preferably of from 500 to 600 °C, and reducing the gas pressure inside the reaction chamber to a pressure of less than 100 mbar, preferably to less than 10 mbar, and most preferably to less than 1 mbar.

In one example embodiment, the precursor gas is carbon monoxide, CO, and step c), forming the coating, may advantageously comprise bringing the temperature of the non-oxidised silicon particles to a temperature in the range of from 300 to 800 °C, preferably of from 400 to 600 °C, and reducing the pressure in the reactor chamber to a pressure of less than 100 mbar, preferably to less than 10 mbar, and most preferably to less than 1 mbar. The residence time/period of time these reaction conditions are kept in the reaction chamber is in the range of from 30 minutes to 4 hours, preferably from 1 to 2 hours.

In one example embodiment, the precursor gas is nitrogen monoxide, NO, and step c), forming the coating, may advantageously comprise bringing the temperature of the non-oxidised silicon particles to a temperature in the range of from - 50 to 500 °C, preferably of from - 50 to 200 °C, and reducing the pressure in the reactor chamber to a pressure of less than 10 kPa, preferably to less than 1 kPa, and most preferably to less than 0.1 kPa. The residence time/period of time these reaction conditions are kept in the reaction chamber is in the range of from 30 minutes to 4 hours, preferably from 1 to 2 hours.

The notation for intervals as used herein follows the international standard ISO 80000-2, where the brackets "[" and "]" indicate a closed interval border, and the parenthesises "(" and ")"indicate an open interval border. For example, [*a, b*] is the closed interval containing every real number from a included to b included:

$$[a, b] = \{x \in \mathbb{R} \mid a \leq x \leq b\}$$ , while (a, b] is the left half-open interval from a excluded to b included:

$$(a, b] = \{x \in \mathbb{R} \mid a < x \leq b\}$$ .

**List of figures**

Figure 1 is a Transmission Electron Microscopy photograph showing a silicon particle coated with a $Si_xC_yO_z$-coating according to the invention.

Figure 2 is an XPS diagram showing elemental composition in the surface region of example embodiments of the coated particles according to the invention.

Figure 3a) is a high resolution diagram of the C1s peak of the XPS diagram shown in figure 2.

Figure 3b) is a high resolution diagram of the O1s peak of the XPS diagram shown in figure 2.

Figure 4 is an XPS diagram showing elemental composition in the surface region of other example embodiments of the coated particles according to the invention.

Figure 5a) and b) are high resolution diagrams of the C1s peak of the XPS diagram shown in figure 4.

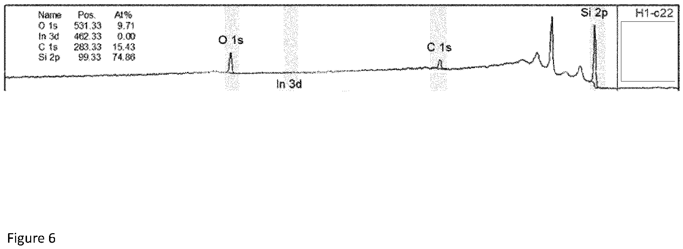

Figure 6 is an XPS diagram showing elemental composition in the surface region of another example embodiment of the coated particles according to the invention.

**Example embodiments of the invention**

The invention will be described in further detail by way of example embodiments and verification tests.

Example 1

A sample of pristine amorphous or nanocrystalline silicon particles having 2 atom% C incorporated in the silicon molecular structure, i.e. a composition of $Si_{0.98}C_{0.02}$, was introduced into an oxygen free reaction chamber. The excess carbon from the production process forms a partial carbon coating on the surface, but this layer is not enough to protect against autoignition. The particles had a BET of 60 $m^2/g$ a BET of 60 $m^2/g$ (corresponding to a mean particle size of 40 nm) when assuming a bulk density of the silicon particles of 2000 $kg/m^3$. The sample was then heated to a temperature of 700 °C and a CO gas at partial pressure in the range 0.01-1 bar was introduced to the reactor chamber. Gas was applied and evacuated in several iterations to study the rate as function of time, pressure and previous coating. I.e., this sample was not dehydronated before being coated. The reaction between the silicon particles and the CO gas was allowed to proceed for a total of one hour to form a surface passivating coating. Then the sample was extracted from the reactor chamber and sent to TEM and XPS analysis.

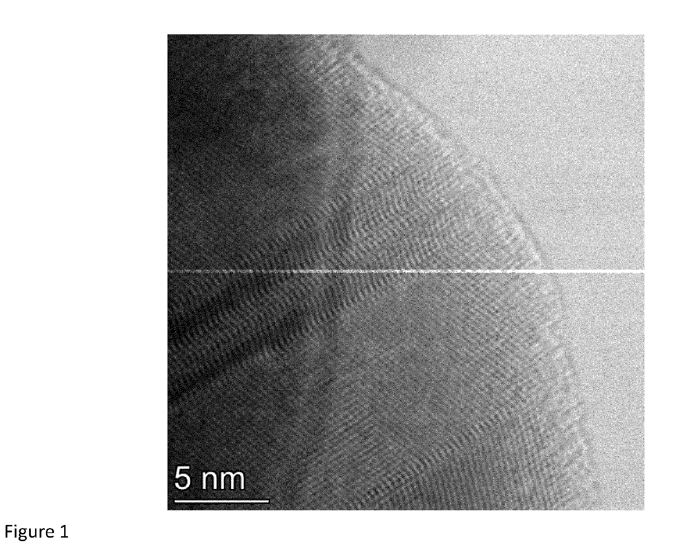

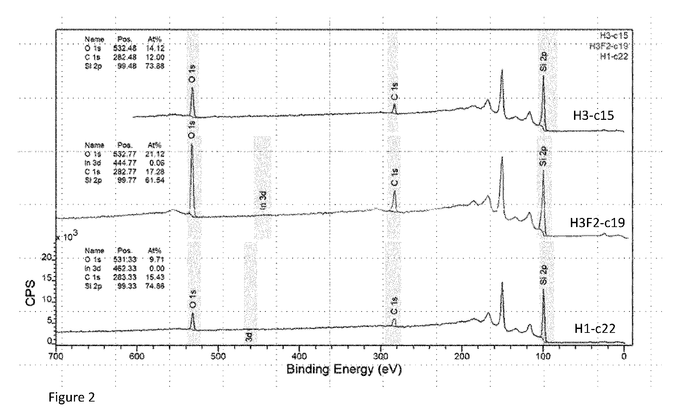

Figure 1 is a TEM photograph showing the resulting $Si_xC_yO_z$-coating on a single silicon particle. An XPS analysis of the sample, shown as the middle curve marked as "H3F2-c19" on figure 2, found that the surface region of the particles had an element composition of 21.1 atom% oxygen and 17.3 atom% carbon, indicating that the combined heat and time led to excessive oxygen incorporation. The silicon particles were no longer flammable and had surface layer thickness estimated to be 2 nm. Also, the heat released during the coating led to a crystallization of the particles. This made visualization of the coating thickness easy but is not always desirable in the final product.

Similar powder was treated according to the same procedure, but with a maximum temperature of 600 °C. This powder is indicated as H3-c15 in the XPS plots. In this case we see that the coating has less oxygen, and that the silicon peak is less tilted towards the $SiO_2$ composition, instead indicating more SiO or Si-O-C bonds.

A third batch was first heated to 600 °C under vacuum to remove hydrogen and thereafter exposed to CO at 530 °C. Again, pressure was varied to study the effect of time, pressure and coating. When the pressure drop due to consumption of CO is reduced to an acceptable fraction of the initial value, the reaction is stopped by removing the CO and cooling the sample. This sample is called H1-C22 in the XPS plots.

All of the samples show similar stability when exposed to oxygen - none of them auto-igniting, even though similar powder without treatment will typically auto-ignite. The c22 sample show that this can be achieved with very low cost in terms of excess oxygen from the coating, if the process is carefully controlled.

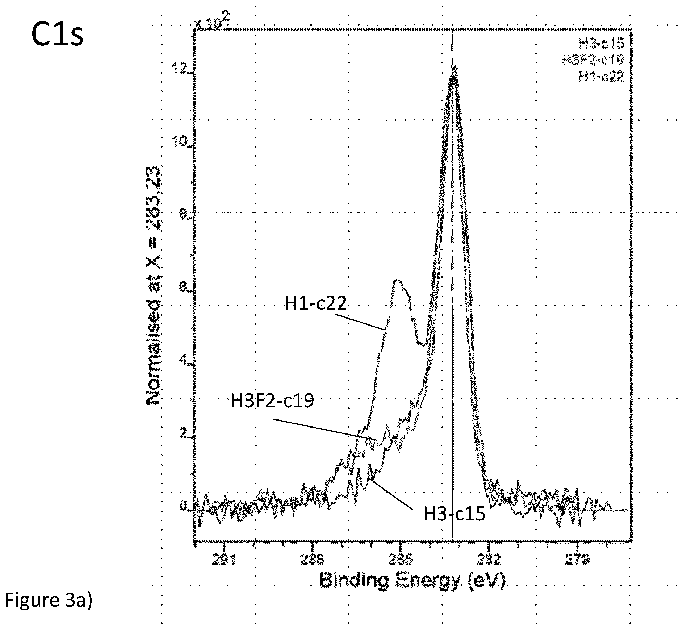

Figure 3a) is a diagram showing a high resolution C1s peak of the XPS analysis. The energy axis is calibrated by using pure Si 2p 3/2 = 99.4 eV. As seen on the figure, above 25 % of the contribution is from a peak in the range of 283 - 284 eV indicating that the carbon is chemically bonded to Si, i.e. as SiC.

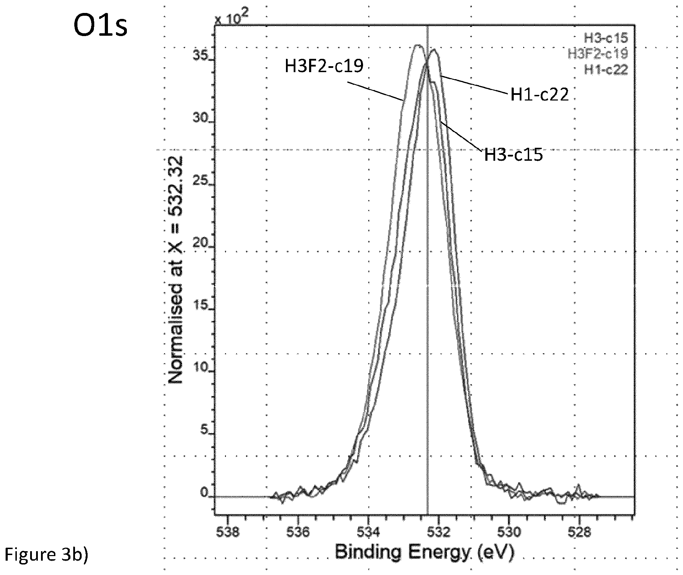

Figure 3b) is a diagram showing a high resolution O1s peak of the XPS analysis. The energy axis is calibrated by using pure Si 2p 3/2 = 99.4 eV. As seen on the figure, above 25 % of the contribution is from a peak in the range of 531.5 - 532.5 eV indicating that the oxygen is chemically bonded Si - O - C.

Example 2

A sample of similar pristine silicon particles as in example 1 was introduced into an oxygen free reaction chamber and heated to a temperature of 600 °C and the gas pressure inside the reactor chamber was reduced to < 0.5 bar for a total duration of approx. 40 minutes to dehydrogenate the surface. Then the temperature of the particles was adjusted to 100 °C and a NO gas at partial pressure of < 0.2 bar was introduced to the reactor chamber. The reaction between the silicon particles and the NO gas was allowed to proceed for approx. 20 minutes to form a surface passivating coating.

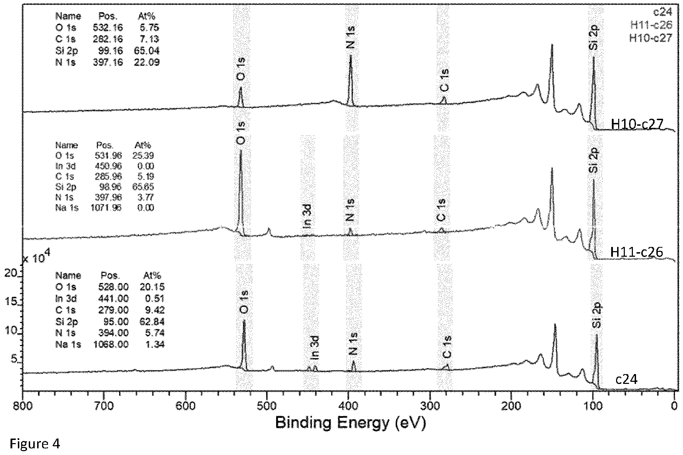

In this case the thickness of the surface coating was estimated to be 2 nm and the element composition at the surface region was found to be, as determined by XPS analysis, to be 25.3 atom% oxygen, 5.2 atom% carbon, 3.8 atom% nitrogen and 65.7 atom% silicon. The XPS analysis is shown as the middle curve marked as "H11-c26" on figure 4. The silicon particles were no longer flammable and had surface layer thickness estimated to be 2 nm.

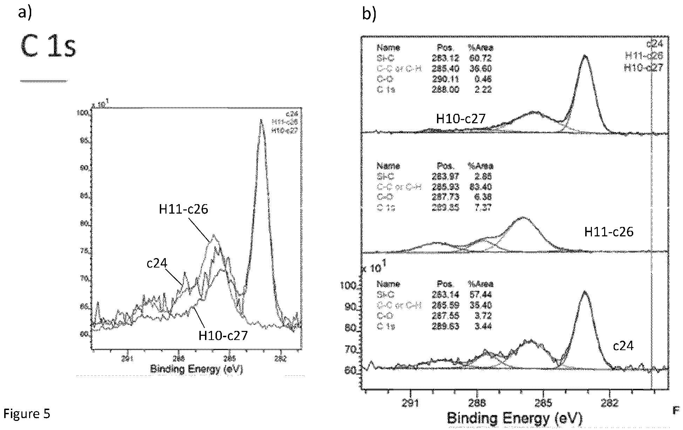

The carbon content is, as can be seen on the high resolution C1s peak shown in figures 5a) and 5b), due to contamination from handling in the air since the carbon peak is almost only C-C or C-H bonded carbon and very little C-Si bonded carbon. The oxygen - nitrogen balance show that the particles were subject to some degree of oxygen exposure before the XPS-analysis. It is assumed that reducing exposure time and duration will further decrease the thickness of the layer. NO is known to self-react to form N2, which would no longer bind to the particle. Thus, the initial reaction is expected to be the most beneficial, and shorter exposure should favourably affect the N/O ratio - this optimization can easily be performed using the techniques described above.

**Reference**

1 Julien Sourice et al. (2015), "One-Step Synthesis of Si@C Nanoparticles by Laser Pyrolysis: High-Capacity Anode Material for Lithium-Ion Batteries", ACS Appl. Mater. Interfaces 2015, 7, 6637-6644, DOI: 10.1021/am5089742

**Claims**

1. A passivated silicon particle, comprising a silicon particle and a coating covering at least a portion of a surface of the silicon particle, **characterised in that**

the coating is a reaction product of:
either

reacting the silicon surface with gaseous carbon monoxide, and an elemental composition of the surface of the particle including the coating is given by the formula: $Si_xC_yO_z$, where $x \in [0.60, 0.90]$, $y \in [0.05, 0.2]$, and $z \in [0.05, 0.2]$,
or

reacting the silicon surface with gaseous nitrogen monoxide, and an elemental composition of the surface of the particle including the coating is given by the formula: $Si_xN_yO_z$, where $x \in [0.60, 0.90]$, $y \in [0.05, 0.2]$, and $z \in [0.05, 0.2]$,
wherein

the elemental composition is determined by XPS analysis applying monochromated Al K$\alpha$ radiation at 1486.6 eV, where the data analysis applies CasaXPS software with Shirley background subtraction and where the energy axis is calibrated by using pure Si 2p 3/2 = 99.4 eV.

2. The passivated silicon particle according to claim 1, wherein the coating has a thickness, as determined by Tunnelling Electron Microscopy, in the range of from 0.1 to 3 nm, preferably of from 0.1 to 2 nm, more preferably of from 0.2 to 1.5 nm, more preferably of from 0.2 to 1.0 nm, more preferably of from 0.4 to 0.7 nm and most preferably of from 0.5 to 0.6 nm.

3. The passivated silicon particle according to claim 1 or 2, wherein the silicon particle before coating has a BET surface area as determined by the standard ISO 9277:2010 of from 15 to 300 m$^2$/g, preferably in the range of from 20 to 200 m$^2$/g, more preferably in the range of from 30 to 150 m$^2$/g, and most preferably in the range of from 60 to 150 m$^2$/g.

4. The passivated silicon particle according to any of claims 1 to 3, wherein the coating is a reaction product of reacting the silicon surface with gaseous carbon monoxide and the XPS analysis, when the energy axis is calibrated by using pure Si 2p 3/2 = 99.4 eV, gives a high resolution C1s peak having a contribution of >25 % from a peak in the range 283 - 284 eV, and a high resolution O1s peak having a contribution of >25 % from a peak in the range 531.5 - 532.5 eV.

5. The passivated silicon particle according to any of claims 1 to 3, wherein the coating is a reaction product of reacting the silicon surface with either gaseous nitrogen monoxide and the XPS analysis, when the energy axis is calibrated by using pure Si 2p 3/2 = 99.4 eV, gives a high resolution N1s peak having a contribution of >50 % from a peak in the range 397.5 - 398.5 eV.

**6.** The passivated silicon particle according to any preceding claim, wherein the silicon phase of the silicon particle is crystalline or amorphous.

**7.** The passivated silicon particle according to any of claims 1 to 3, wherein the silicon phase of the silicon particle is amorphous, and wherein

- the silicon phase comprises a chemical compound of formula: $Si_{(1-x)}M_x$, where $0.005 \leq x < 0.20$ and M is at least one substitution element chosen from; C, N, O, or a combination thereof, and
- the particles, when subjected to XRD analysis applying unmonochromated $CuK\alpha$ radiation, exhibit one peak at around 28° and one peak at around 52°, and where both peaks have a Full Width at Half Maximum of at least 5° when using Gaussian peak fitting.

**8.** A method for manufacturing passivated silicon particles according to any of claims 1 - 7, wherein the method comprises the following steps to be executed in successive order:

a) providing non-oxidised silicon particles,
b) placing the non-oxidised silicon particles in an oxygen free reactor chamber,
c) forming a coating at least partly covering a surface of the non-oxidised silicon particles, and
d) collecting the passivated silicon particles from the reaction chamber, **characterised in that**

the formation of the coating in step c) is obtained by the following steps:

c-1) introducing a precursor gas being gaseous carbon monoxide, CO, or gaseous nitrogen monoxide, NO, into the reactor chamber, and
c-2) maintaining the silicon particles in the reaction chamber for a period of time until the coating is formed, and
wherein
when the precursor gas in step c-1) is carbon monoxide, CO, then step c-1) further comprises the steps of:

c-1-1) bringing the temperature of the non-oxidised silicon particles to a temperature in the range of from 300 to 800 °C, preferably of from 400 to 600 °C, and
c-1-2) reducing the pressure in the reactor chamber to a pressure of less than 10 kPa, preferably to less than 1 kPa, and most preferably to less than 0.1 kPa,
or
when the precursor gas in step c-1) is nitrogen monoxide, NO, then step c-1) further comprises the steps of:

c-1-1) bringing the temperature of the non-oxidised silicon particles to a temperature in the range of from - 50 to 500 °C, preferably of from - 50 to 200 °C, and
c-1-2) reducing the pressure in the reactor chamber to a pressure of less than 10 kPa, preferably to less than 1 kPa, and most preferably to less than 0.1 kPa.

**9.** The method according to claim 8, wherein the method further comprises a dehydrogenation step to be executed after step b) and before step c), where the dehydrogenation step comprises the following steps:

b-1) bringing the temperature of the non-oxidised silicon particles to a temperature in the range of from 400 to 600 °C, preferably of from 500 to 600 °C, and
b-2) reducing the gas pressure inside the reaction chamber to a pressure of less than 10 kPa, preferably to less than 1 kPa, and most preferably to less than 0.1 kPa

**Patentansprüche**

**1.** Passiviertes Silizium-Teilchen, umfassend ein Silizium-Teilchen und eine Beschichtung, die mindestens einen Abschnitt einer Oberfläche des Silizium-Teilchens bedeckt, **dadurch gekennzeichnet, dass**
die Beschichtung ein Reaktionsprodukt von Folgendem ist:

entweder
Reagierenlassen der Silizium-Oberfläche mit gasförmigem Kohlenmonoxid, und wobei eine elementare Zusammensetzung der Oberfläche des Teilchens einschließlich der Beschichtung durch die folgende Formel dargestellt ist: $Si_xC_yO_z$, wobei $x \in [0{,}60, 0{,}90]$, $y \in [0{,}05, 0{,}2]$ und $z \in [0{,}05, 0{,}2]$,
oder
Reagierenlassen der Silizium-Oberfläche mit gasförmigem Stickstoffmonoxid, und wobei eine elementare Zusammensetzung der Oberfläche des Teilchens einschließlich der Beschichtung durch die folgende Formel dargestellt ist: $Si_xN_yO_z$, wobei $x \in [0{,}60, 0{,}90]$, $y \in [0{,}05, 0{,}2]$ und $z \in [0{,}05, 0{,}2]$,
wobei
die elementare Zusammensetzung durch XPS-Analyse unter Anwendung von monochromatischer Al Kα-Strahlung bei 1486,6 eV bestimmt wird, wobei die Datenanalyse die CasaXPS-Software mit Shirley-Untergrundsubtraktion anwendet und wobei die Energieachse unter Verwendung von reinem Si 2p 3/2 = 99,4 eV kalibriert wird.

2. Passiviertes Silizium-Teilchen nach Anspruch 1, wobei die Beschichtung eine Dicke, wie durch Tunnelelektronenmikroskopie bestimmt, im Bereich von 0,1 bis 3 nm, vorzugsweise von 0,1 bis 2 nm, bevorzugter von 0,2 bis 1,5 nm, bevorzugter von 0,2 bis 1,0 nm, bevorzugter von 0,4 bis 0,7 nm und am meisten bevorzugt von 0,5 bis 0,6 nm aufweist.

3. Passiviertes Silizium-Teilchen nach Anspruch 1 oder 2, wobei das Silizium-Teilchen vor dem Beschichten einen BET-Oberflächenbereich, wie durch die Norm ISO 9277:2010 bestimmt, von 15 bis 300 m$^2$/g, vorzugsweise in dem Bereich von 20 bis 200 m$^2$/g, bevorzugter in dem Bereich von 30 bis 150 m$^2$/g und am bevorzugtesten in dem Bereich von 60 bis 150 m$^2$/g aufweist.

4. Passiviertes Silizium-Teilchen nach einem der Ansprüche 1 bis 3, wobei die Beschichtung ein Reaktionsprodukt eines Reagierenlassens der Silizium-Oberfläche mit gasförmigem Kohlenmonoxid ist und die XPS-Analyse, wenn die Energieachse unter Verwendung von reinem Si 2p 3/2 = 99,4 eV kalibriert wird, einen hochauflösenden C1s-Peak mit einem Beitrag von >25 % von einem Peak im Bereich von 283 - 284 eV und einen hochauflösenden O1s-Peak mit einem Beitrag von >25 % von einem Peak im Bereich von 531,5 - 532,5 eV ergibt.

5. Passiviertes Silizium-Teilchen nach einem der Ansprüche 1 bis 3, wobei die Beschichtung ein Reaktionsprodukt eines Reagierenlassens der Silizium-Oberfläche mit entweder gasförmigem Stickstoffmonoxid ist und die XPS-Analyse, wenn die Energieachse unter Verwendung von reinem Si 2p 3/2 = 99,4 eV kalibriert ist, einen hochauflösenden N1s-Peak mit einem Beitrag von >50 % von einem Peak im Bereich von 397,5 - 398,5 eV ergibt.

6. Passiviertes Silizium-Teilchen nach einem vorhergehenden Anspruch, wobei die Silizium-Phase des Silizium-Teilchens kristallin oder amorph ist.

7. Passiviertes Silizium-Teilchen nach einem der Ansprüche 1 bis 3, wobei die Silizium-Phase des Silizium-Teilchens amorph ist und wobei

- die Silizium-Phase eine chemische Verbindung der folgenden Formel umfasst: Si$_{(1-x)}$M$_x$, wobei 0,005 ≤ x < 0,20 und M mindestens ein Substitutionselement ausgewählt aus C, N, O oder einer Kombination davon ist, und
- die Teilchen, wenn sie einer XRD-Analyse unter Anwendung von nicht monochromatischer CuKα-Strahlung unterzogen werden, einen Peak bei etwa 28° und einen Peak bei etwa 52° zeigen und wobei beide Peaks eine Halbwertsbreite von mindestens 5° aufweisen, wenn eine Gaußsche Peakanpassung verwendet wird.

8. Verfahren zum Herstellen passivierter Silizium-Teilchen nach einem der Ansprüche 1-7, wobei das Verfahren die folgenden Schritte umfasst, die in aufeinanderfolgender Reihenfolge auszuführen sind:

a) Bereitstellen nicht oxidierter Silizium-Teilchen,
b) Platzieren der nicht oxidierten Silizium-Teilchen in einer sauerstofffreien Reaktorkammer,
c) Ausbilden einer Beschichtung, die eine Oberfläche der nicht oxidierten Silizium-Teilchen mindestens teilweise bedeckt, und
d) Sammeln der passivierten Silizium-Teilchen aus der Reaktionskammer, **dadurch gekennzeichnet, dass**
die Ausbildung der Beschichtung in Schritt c) durch die folgenden Schritte erreicht wird:

c-1) Einleiten eines Vorläufergases, das gasförmiges Kohlenmonoxid, CO, oder gasförmiges Stickstoffmonoxid, NO, ist, in die Reaktorkammer und
c-2) Halten der Silizium-Teilchen in der Reaktionskammer für einen Zeitraum, bis die Beschichtung ausgebildet ist, und

wobei
wenn das Vorläufergas in Schritt c-1) Kohlenmonoxid, CO, ist, dann Schritt c-1) ferner die folgenden Schritte umfasst:

c-1-1) Bringen der Temperatur der nicht oxidierten Silizium-Teilchen auf eine Temperatur im Bereich von 300 bis 800 °C, vorzugsweise von 400 bis 600 °C und
c-1-2) Reduzieren des Drucks in der Reaktorkammer auf einen Druck von weniger als 10 kPa, vorzugsweise auf weniger als 1 kPa und am meisten bevorzugt auf weniger als 0,1 kPa, oder
wenn das Vorläufergas in Schritt c-1) Stickstoffmonoxid, NO, ist, dann Schritt c-1) ferner die folgenden Schritte umfasst:

c-1-1) Bringen der Temperatur der nicht oxidierten Silizium-Teilchen auf eine Temperatur im Bereich von -50 bis 500 °C, vorzugsweise von -50 bis 200 °C und

c-1-2) Reduzieren des Drucks in der Reaktorkammer auf einen Druck von weniger als 10 kPa, vorzugsweise auf weniger als 1 kPa und am meisten bevorzugt auf weniger als 0,1 kPa.

**9.** Verfahren nach Anspruch 8, wobei das Verfahren ferner einen Dehydrierungsschritt umfasst, der nach Schritt b) und vor Schritt c) auszuführen ist, wobei der Dehydrierungsschritt die folgenden Schritte umfasst:

b-1) Bringen der Temperatur der nicht oxidierten Silizium-Teilchen auf eine Temperatur im Bereich von 400 bis 600 °C, vorzugsweise von 500 bis 600 °C und

b-2) Reduzieren des Gasdrucks im Inneren der Reaktorkammer auf einen Druck von weniger als 10 kPa, vorzugsweise auf weniger als 1 kPa und am meisten bevorzugt auf weniger als 0,1 kPa.

## Revendications

**1.** Particule de silicium passivée, comprenant une particule de silicium et un revêtement recouvrant au moins une partie d'une surface de la particule de silicium, **caractérisée en ce que**
le revêtement est un produit de réaction de :

la réaction de la surface de silicium avec du monoxyde de carbone gazeux, et une composition élémentaire de la surface de la particule comprenant le revêtement est donnée par la formule : $Si_xC_yO_z$, où $x \, \varepsilon \, [0,60, \, 0,90]$, $y \, \varepsilon \, [0,05, \, 0,2]$ et $z \, \varepsilon \, [0,05, \, 0,2]$,
ou
la réaction de la surface de silicium avec du monoxyde d'azote gazeux, et une composition élémentaire de la surface de la particule comprenant le revêtement est donnée par la formule : $Si_xN_yO_z$, où $x \, \varepsilon \, [0,60, \, 0,90]$, $y \, \varepsilon \, [0,05, \, 0,2]$ et $z \, \varepsilon \, [0,05, \, 0,2]$,
dans laquelle
la composition élémentaire est déterminée par analyse XPS en appliquant un rayonnement Al $K\alpha$ monochromé à 1486,6 eV, où l'analyse de données applique le logiciel CasaXPS avec soustraction de fond Shirley et où l'axe d'énergie est étalonné en utilisant du Si pur 2p 3/2 = 99,4 eV.

**2.** Particule de silicium passivée selon la revendication 1, dans laquelle le revêtement présente une épaisseur, telle que déterminée par microscopie électronique à effet tunnel, dans la plage de 0,1 à 3 nm, de préférence de 0,1 à 2 nm, idéalement de 0,2 à 1,5 nm, idéalement de 0,2 à 1,0 nm, idéalement de 0,4 à 0,7 nm et plus préférablement de 0,5 à 0,6 nm.

**3.** Particule de silicium passivée selon l'une des revendications 1 ou 2, dans laquelle la particule de silicium avant revêtement possède une surface BET telle que déterminée par la norme ISO 9277:2010 de 15 à 300 m$^2$/g, de préférence dans la plage de 20 à 200 m$^2$/g, idéalement dans la plage de 30 à 150 m$^2$/g, et plus préférablement dans la plage de 60 à 150 m$^2$/g.

**4.** Particule de silicium passivée selon l'une quelconque des revendications 1 à 3, dans laquelle le revêtement est un produit de réaction de la réaction de la surface de silicium avec du monoxyde de carbone gazeux et l'analyse XPS, lorsque l'axe d'énergie est étalonné en utilisant du Si pur 2p 3/2 = 99,4 eV, donne un pic C1s haute résolution présentant une contribution >25 % provenant d'un pic dans la plage de 283 à 284 eV, et un pic O1s haute résolution présentant une contribution >25 % provenant d'un pic dans la plage de 531,5 à 532,5 eV.

**5.** Particule de silicium passivée selon l'une quelconque des revendications 1 à 3, dans laquelle le revêtement est un produit de réaction de la réaction de la surface de silicium avec du monoxyde d'azote gazeux et l'analyse XPS, lorsque l'axe d'énergie est étalonné en utilisant du Si pur 2p 3/2 = 99,4 eV, donne un pic N1s haute résolution présentant une contribution >50 % provenant d'un pic dans la plage de 397,5 à 398,5 eV.

**6.** Particule de silicium passivée selon une quelconque revendication précédente, dans laquelle la phase de silicium de la particule de silicium est cristalline ou amorphe.

**7.** Particule de silicium passivée selon l'une quelconque des revendications 1 à 3, dans laquelle la phase de silicium de la particule de silicium est amorphe, et dans laquelle

- la phase silicium comprend un composé chimique de formule : $Si_{(1-x)}M_x$, où $0,005 \le x < 0,20$ et M est au moins un élément de substitution choisi parmi ; C, N, O, ou une combinaison de ceux-ci, et
- les particules, lorsqu'elles sont soumises à une analyse par DRX appliquant un rayonnement $CuK\alpha$ non monochromé, présentent un pic à environ 28° et un pic à environ 52°, et où les deux pics présentent une largeur totale à mi-hauteur d'au moins 5° lors de l'utilisation d'un ajustement de pic gaussien.

**8.** Procédé permettant la fabrication de particules de silicium passivées selon l'une quelconque des revendications 1 à 7, ledit procédé comprenant les étapes suivantes à exécuter dans l'ordre successif :

a) la fourniture de particules de silicium non oxydées,
b) le placement des particules de silicium non oxydées dans une chambre de réacteur exempte d'oxygène,
c) la formation d'un revêtement recouvrant au moins partiellement une surface des particules de silicium non oxydées, et
d) la collecte des particules de silicium passivées de la chambre de réaction,

**caractérisé en ce que**

la formation du revêtement à l'étape c) est obtenue par les étapes suivantes :

c-1) l'introduction d'un gaz précurseur constitué de monoxyde de carbone gazeux, CO, ou de monoxyde d'azote gazeux, NO, dans la chambre de réacteur, et
c-2) le maintien des particules de silicium dans la chambre de réaction pendant une certaine période jusqu'à la formation du revêtement, et

dans lequel
lorsque le gaz précurseur à l'étape c-1) est le monoxyde de carbone, CO, alors l'étape c-1) comprend en outre les étapes de :

c-1-1) élévation de la température des particules de silicium non oxydées à une température dans la plage de 300 à 800 °C, de préférence de 400 à 600 °C, et
c-1-2) réduction de la pression dans la chambre de réacteur à une pression inférieure à 10 kPa, de préférence inférieure à 1 kPa, et plus préférablement inférieure à 0,1 kPa, ou

lorsque le gaz précurseur à l'étape c-1) est le monoxyde d'azote, NO, alors l'étape c-1) comprend en outre les étapes de :

c-1-1) élévation de la température des particules de silicium non oxydées à une température dans la plage de -50 à 500 °C, de préférence de -50 à 200 °C, et
c-1-2) réduction de la pression dans la chambre de réacteur à une pression inférieure à 10 kPa, de préférence inférieure à 1 kPa, et plus préférablement inférieure à 0,1 kPa.

**9.** Procédé selon la revendication 8, ledit procédé comprenant en outre une étape de déshydrogénation à exécuter après l'étape b) et avant l'étape c), où l'étape de déshydrogénation comprend les étapes suivantes :

b-1) élévation de la température des particules de silicium non oxydées à une température dans la plage de 400 à 600 °C, de préférence de 500 à 600 °C, et
b-2) réduction de la pression de gaz à l'intérieur de la chambre de réaction à une pression inférieure à 10 kPa, de préférence inférieure à 1 kPa, et plus préférablement inférieure à 0,1 kPa.

Figure 1

Figure 2

Figure 3a)

Figure 3b)

Figure 4

a)

C 1s

b)

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 10211454 B2
- US 2019249301 A1
- EP 2588049 A1
- US 2019296341 A1

### Non-patent literature cited in the description

- **JULIEN SOURICE et al.** One-Step Synthesis of Si@C Nanoparticles by Laser Pyrolysis: High-Capacity Anode Material for Lithium-Ion Batteries. *ACS Appl. Mater. Interfaces*, 2015, vol. 2015 (7), 6637-6644